# EUROPEAN PATENT SPECIFICATION

(11) **EP 3 179 818 B1**
(45) Date of publication and mention of the grant of the patent: **13.06.2018**
(21) Application number: 17154056.0
(22) Date of filing: 23.12.2011
(51) Int. Cl.: H04W 76/14

(54) **METHOD AND APPARATUS FOR PROTECTING CONTENT IN A WI-FI DIRECT COMMUNICATION SCHEME**
VERFAHREN UND VORRICHTUNG ZUM SCHUTZ VON INHALTEN IN EINEM WI-FI-DIREKT KOMMUNIKATIONSSCHEMA
PROCÉDÉ ET APPAREIL POUR PROTÉGER UN CONTENU DANS UN SCHÉMA DE COMMUNICATION DIRECTE WI-FI

(30) Priority: 24.12.2010 US 201061427156 P
(43) Date of publication of application: 14.06.2017
(62) Divisional of application: 11851251.6
(73) Proprietor: Samsung Electronics Co., Ltd., Gyeonggi-do 16677 (KR)
(72) Inventor: JEONG, Jin-Woo, Seoul (KR); VERMA, Lochan, Seoul (KR)
(74) Representative: Appleyard Lees IP LLP

(56) References cited:
- WO-A1-2010/086699
- US-A1- 2010 322 213
- ANDREAUX J ET AL: "Copy protection system for digital home networks", IEEE SIGNAL PROCESSING MAGAZINE, IEEE SERVICE CENTER, PISCATAWAY, NJ, US, vol. 21, no. 2, 1 March 2004 (2004-03-01), pages 100-108, XP011109338, ISSN: 1053-5888, DOI: 10.1109/MSP.2004.1276118
- MICHAEL MONTEMURRO ET AL: "IEEE 802.11 Wireless LANs TDLS Peer Discovery", INTERNET CITATION, 18 January 2010 (2010-01-18), pages 1-13, XP002656379, Retrieved from the Internet: URL:www.ieee.org [retrieved on 2011-08-04]
- Wi-Fi Alliance: "Wi-Fi CERTIFIED Wi-Fi Direct", , 1 October 2010 (2010-10-01), pages 1-14, XP055041124, Retrieved from the Internet: URL:http://www.wi-fi.org/knowledge-center/ white-papers/wi-fi-certified-wi-fi-direct% E2%84%A2-personal-portable-wi-fi%C2%AE-con nect-devices [retrieved on 2012-10-16]

## Description

### BACKGROUND OF THE INVENTION

### 1. Field of the Invention

The present invention relates to a method and device for protecting content in a Wi-Fi direct communication scheme.

### 2. Description of the Related Art

A Wi-Fi direction communication scheme is different from the conventional Wi-Fi scheme, and is a network suggested by an Wi-Fi alliance that is connected by a peer-to peer scheme between devices even though Wi-Fi devices do not participate in a home network, an office network and a hot spot network.

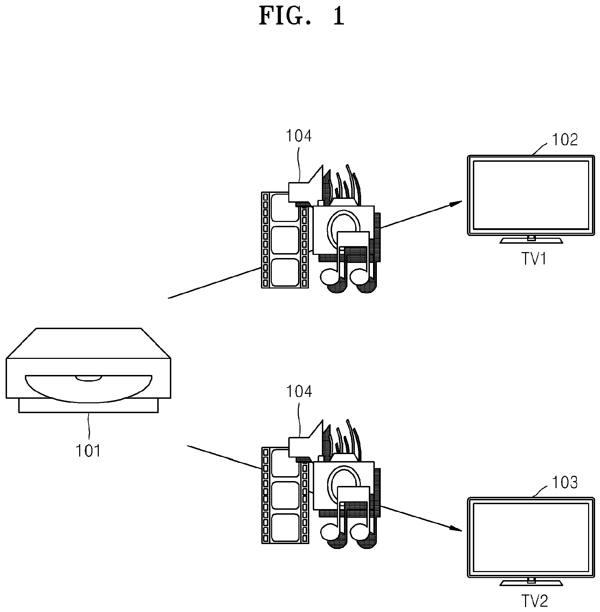

FIG. 1 illustrates a Wi-Fi direct communication scheme according to a prior art.

In FIG. 1, a DVD player 101 uses the Wi-Fi direct communication scheme to transmit a content 104 such as music, photos and moving images to a TV1 102 or a TV2 103 which is a display device.

The DVD player 101 may be another device that stores a content, such as an MP3 player, a personal computer and a simple storage medium.

The TV1 102 or the TV2 103 may be another device that displays a content to a user, such as a monitor and a speaker.

A content 104 such as music, a photo and a moving image may be a content protected by a copyright.

The conventional Wi-Fi direct (P2P) scheme is not a standard that has been suggested in consideration of a display device, but is a standard that has been suggested on the basis of connectivity between devices. Hence, it was not possible to recognize whether a device supports content protection before setting connection between devices.

In the Wi-Fi direction scheme, it is not possible for the DVD player 101 to recognize whether each TV supports content protection before setting connection with the TV1 102 and the TV2 103 of FIG. 1. When assuming that the TV1 102 is a device that does not supports content protection and the TV2 103 is a device that supports content protection, if the DVD player 101 is connected to the TV1 102 through the Wi-Fi direct scheme and the content 104 protected by the copyright is intended to be replayed, a message indicating that the content cannot be replayed in the TV1 101 is displayed. Thus, when the user desires to replay the content 104 through the DVD player 101, the user inconveniently needs to wait for connection between the DVD player 101 and the TV2 103 and then replay the content.

Further, the TV1 102 does not support content protection and thus cannot replay the content 104, but unnecessary power is consumed to perform connection with the DVD player 101.

WO2010/086699 describes a method for device capability advertising and discovery in a wireless network in which in response to receiving a capability advertisement message which comprises role capabilities, an activation message which requests at least one role capability of the capability is sent to a device on a bearer; and in response to the activation message, from the device on the bearer is received a notification message which indicates whether the role capability of the activation message was accepted.

The article Andreaux, J.-P.; Durand, A.; Furon, T.; Diehl, E., "Copy protection system for digital home networks," in Signal Processing Magazine, IEEE, vol.21, no.2, pp.100, Mar 2004 describes the rationale supporting the design of a copy protection system called SmartRight. While carefully presenting the motivation, some light is shed on the very peculiar problems raised by the enforcement of copy protection. The article also explores less technical but highly important issues such as the legal and commercial aspects.

### SUMMARY OF THE INVENTION

The present invention provides a method for receiving information on whether a device supports content protection in a device discovery procedure of searching for a surrounding device when performing communication between display devices according to a Wi-Fi direct scheme in order to provide a communication scheme for performing an efficient Wi-Fi direct communication scheme between display devices.

According to the present invention there is provided an device and method as set forth in the appended claims. Other features of the invention will be apparent from the dependent claims, and the description which follows.

### BRIEF DESCRIPTION OF THE DRAWINGS

The above and other features and advantages of the present invention will become more apparent by describing in detail exemplary embodiments thereof with reference to the attached drawings in which:
FIG. 1 is a conceptual diagram illustrating a Wi-Fi direct communication scheme according to a prior art;
FIG. 2 is a flowchart illustrating a device discovery procedure of a first device according to an embodiment of the present invention;
FIG. 3 is a flowchart illustrating a device discovery procedure of a first device according to another embodiment of the present invention;
FIG. 4 is a block diagram illustrating a structure of a first device and a second device according to an embodiment of the present invention;
FIG. 5 is a diagram illustrating a Wi-Fi display (WFD) information element (IE) according to an embodiment of the present invention;
FIG. 6 is a diagram illustrating a general format of a WFD subelement according to an embodiment of the present invention;
FIG. 7 is a diagram illustrating a WFD subelement ID according to an embodiment of the present invention;
FIG. 8 is a diagram illustrating a WFD device information subelement according to an embodiment of the present invention;
FIG. 9 is a diagram illustrating a WFD device information field according to an embodiment of the present invention; and
FIG. 10 is a signal flowchart of a WFD communication according to an embodiment of the present invention.

### DETAILED DESCRIPTION OF THE INVENTION

The present invention will now be described more fully with reference to the accompanying drawings, in which exemplary embodiments of the invention are shown. Like reference numerals in the drawings denote like elements, and thus their description will be omitted. The size of each component of drawings may be exaggerated for clarity of description.

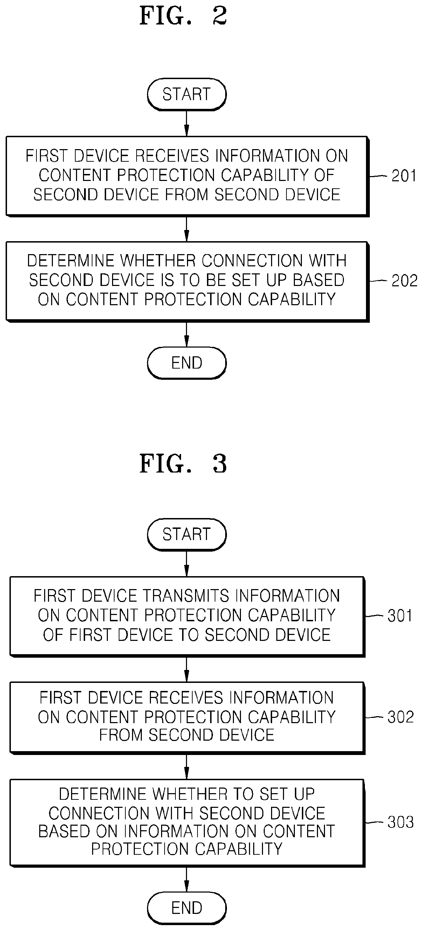

FIG. 2 is a flowchart illustrating a device discovery procedure of a first device according to an embodiment of the present invention.

The device discovery procedure is a procedure for finding a surrounding device for communication, and is a procedure of searching for a device that supports a Wi-Fi direct scheme among devices existing around a device in order for the device to perform connection. Furthermore, when there is a device that supports a Wi-Fi direct scheme, information on each device may be received.

However, the conventional Wi-Fi direct (P2P) scheme is not a standard that has been suggested in consideration of a display device, and thus there is no procedure for appropriately protecting a content in the device discovery procedure.

In operation 201, the first device receives information on content protection capability of the second device from the second device in the device discovery procedure.

The information on the content protection capability is information whether the device supports a content protection.

The information on the content protection capability of the second device received from the second device may be included in a probe response message. The probe response message is a message of receiving device information in the device discovery procedure of the Wi-Fi direct communication scheme.

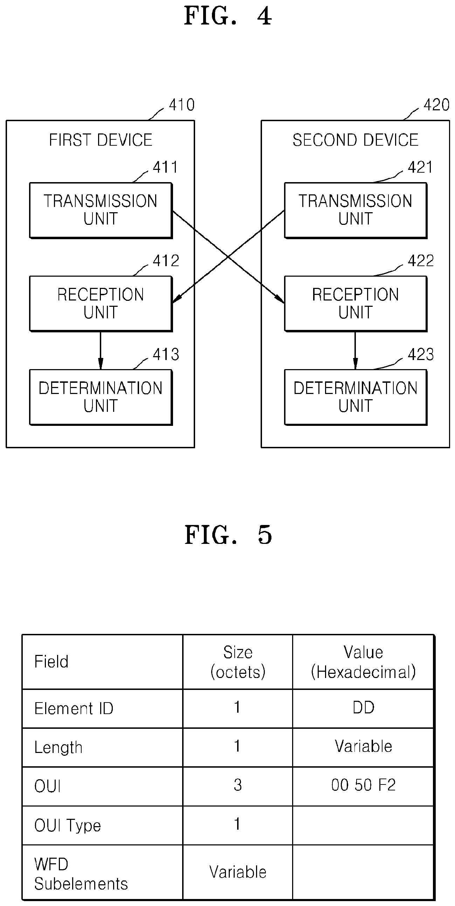

Specifically, the information on the content protection capability may be included in the Wi-Fi display information element (WFD IE). The WFD IE will be described later in detail with reference to FIG. 5.

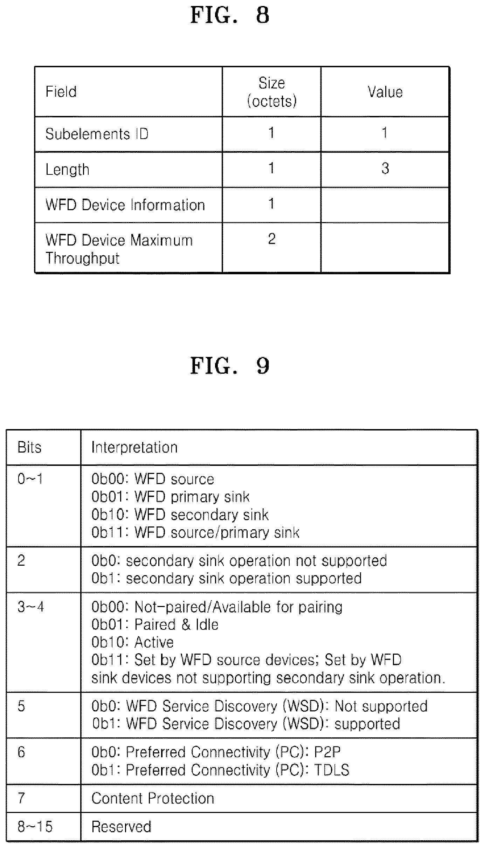

Furthermore, the information on the content protection capability may be included in the WFD information field within the WFD IE. The WFD information field will be described later in detail with reference to FIG. 8.

The information on the content protection capability may be information indicating whether the second device supports high definition content protection 2.0 (HDCP 2.0).

Here, the HDCP is one of copyright protection technologies for encrypting a path through which digital signals are transmitted and received from a moving image replay device to a display device, and preventing an unauthorized copy of a content, and is a standard designed to protect integrity of a content. The HDCP is a well known standard, and thus the detailed description thereof will be omitted here.

In operation 202, it is determined whether the first device may perform a connection setup procedure with the second device based on information on the content protection capability of the second device received in operation 201.

That is, the first device determines whether the second device supports content protection by the information received from the second device, and determines whether to perform a connection setup procedure with the second device.

Various methods may be used to determine whether to perform the connection setup procedure. For example, when there are a plurality of devices that support a Wi-Fi direct communication scheme, information on whether to perform a connection setup with another device may be received from the user by displaying whether the plurality of devices support content protection on the first device.

As another embodiment, a connection setup may be set to be automatically performed according to a priority that is set in the first device.

If there is only one device that supports the Wi-Fi direct communication scheme, the device may be set to display whether the device supports content protection before performing the connection setup.

FIG. 3 is a flowchart illustrating a device discovery procedure of a first device according to another embodiment of the present invention.

In the Wi-Fi direct scheme, the device determined the device that operates as an access point (AP) or the device that operates as a station after the connection setup procedure, and thus the role of each device is not determined in the device discover procedure. Hence, the second device may need the information of the first device after the connection setup procedure, and thus the second device also receives the information of the first device.

In operation 301, the first device transmits information on the content protection capability of the first device to the second device.

The information on the content protection capability transmitted by the first device to the second device may be included in a probe request message.

The probe request message is a message of transmitting device information in the device discovery procedure of the Wi-Fi direct communication scheme.

The information on the content protection capability may be included in WFD IE.

The information on the content protection capability may be included in the WFD device information field within the WFD IE.

The information on the content protection capability may be information indicating whether HDCP 2.0 is supported.

In operation 302, the first device receives information on the content protection capability from the second device as in operation 201 of FIG. 2.

In operation 303, the first device determines whether to set up connection with the second device based on the information on the content protection capability as in operation 202 of FIG. 2. The connection setup may be performed in various schemes as was described with reference to FIG. 2.

Furthermore, the second device may also determine connection with the first device based on the information on the content protection capability received from the first device.

FIG. 4 is a block diagram illustrating a structure of a first device and a second device according to an embodiment of the present invention.

The transmission unit 411 of the first device 410 transmits information on the content protection capability of the first device to the second device. As illustrated in FIG. 3, the information related to the content protection capability of the first device 410 may be included in the probe request message, WFD IE, and WFD device information field of the WFD IE.

A reception unit 412 of the first device 410 receives information related with the content protection capability of the second device 420 from the second device.

The determination unit 413 of the first device 410 determines whether to perform a connection setup procedure with the second device 420 based on the information related with the content protection capability of the second device which has been received by the reception unit from the second device 420.

The transmission unit of the second device 420 transmits the information related with the content protection capability of the second device 420 to the first device 410.

The reception unit 421 of the second device 420 receives information related with the content protection capability of the first device 410 from the first device 410.

A determination unit 423 of the second device determines whether to perform a connection setup procedure with the first device 410 based on information related with the content protection capability of the first device 410 received from the first device 410.

FIG. 5 is a diagram illustrating a Wi-Fi display (WFD) information element (IE) according to an embodiment of the present invention.

Here, WFD is a communication scheme, and refers to a scheme where communication is performed between display devices based on Wi-Fi direct standard.

WFD IE represents a format of a frame that receives basic information such as a device type and state. The probe request frame or probe response frame is also written according to the format of the WFD IE.

In the illustrated example, WFD IE includes Element ID, Length, OUI, OUI Type, and WFD Subelements. Respective sizes of Element ID, Length, OUI, and OUI TYPE fields are 1, 1, 3 and 1 octets, and the size of WFD Subelements is variable.

Element ID field is a field that is used when a vendor desires to make functions that are not defined in IEEE 802.11 standard, and Length field denotes the entire length of WFD IE.

OUI field is an abbreviation of Organization Unique Identifier and represents a unique identifier defined to distinguish each vendor, and OUI Type field represents the version of WFD IE.

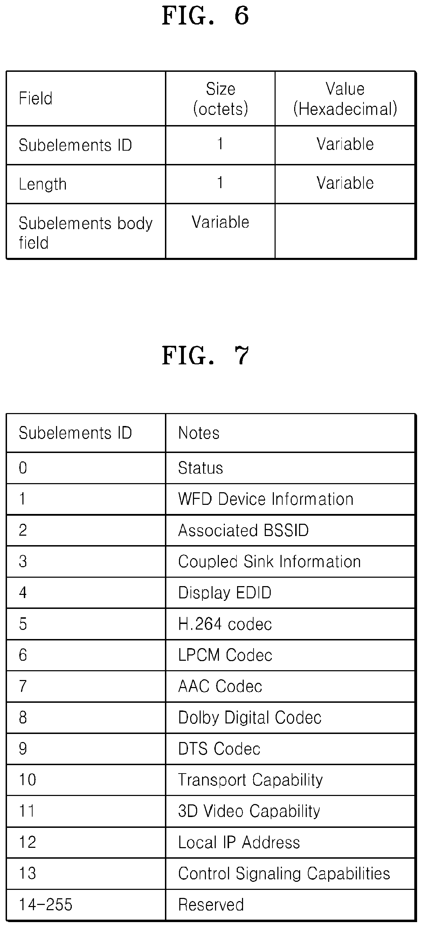

The content written in the WFD IE is not sufficient for the WFD Subelement field, and thus the points indicating detailed device information are included in the WFD Subelement field. The points included in the WFD Subelement field will be described in detail with reference to FIG. 6.

Some of WFD IE of the present invention may be omitted as is necessary.

FIG. 6 is a diagram illustrating a general format of a WFD Subelement according to an embodiment of the present invention.

Here, the WFD Subelement includes Subelement ID, Length, and Subelements body fields. Sizes of Subelement ID and Length fields are respectively 1, and the size of the Subelement body field is variable.

The Subelement ID of the present embodiment represents a type of the WFD Subelement, which will be described later in detail with reference to FIG. 7.

The Length field of the present embodiment represents the entire length of the WFD Subelement.

The Subelements body field of the present embodiment shows specific points of the Subelement.

Some of the WFD Subelements may be omitted as is necessary.

FIG. 7 is a diagram illustrating a WFD subelement ID according to an embodiment of the present invention.

WFD Device Information of the present embodiment refers to information on WFD device. In the present invention, the content protection capability of a device intended to be acquired before setting up connection is written on the WFD Subelement of the WFD Device Information type, which will be described in detail with reference to FIG. 8.

Status of the present embodiment represents status information of the device.

Associated BSSID of the present embodiment represents an identifier that identifies a basic service area in 802.11.

Display EDID of the present embodiment represents a type of data for transmitting display information of a device.

Coupled Sink Information of the present embodiment represents connection with another device.

H.264 Codec, LPCM Codec, AAC Codec, Dolby Digital Codec, and DTS Codec of the present embodiment show information on Codec. Each Codec is a well known standard in the art and thus detailed description on each Codec is omitted here.

Transport Capability, 3D Video Capability, Local IP Address, and Control Signaling Capabilities of the present embodiment show the capability and address of the device, and the detailed description thereof is omitted here.

Furthermore, the information related with content protection capability may be included in the Subelement ID by adding Content Protection Capability.

Some of Subelement IDs may be omitted as is necessary.

FIG. 8 is a diagram illustrating information included in a WFD device information Subelement according to an embodiment of the present invention.

When Subelement ID field of FIG. 7 is 1, Subelement about WFD Device Information is included. Here, the content related with device information is displayed in WFD device information in a bitmap format. The details are described with reference to FIG. 8.

WFD Device Maximum Throughput shows the maximum average throughput of the device.

FIG. 9 is a diagram illustrating a WFD device information field according to an embodiment of the present invention.

WFD device information field may be disclosed in a bitmap form.

First and second bits of WFD device information field (bits 0 and 1) of the present embodiment indicate a WFD source, a WFD sink, a primary sink device or a secondary sink device.

A third bit of WFD device information field (bit 2) of the present embodiment indicates whether a secondary sink operation is supported.

Fourth and fifth bits of WFD device information field (bits 3 and 4) of the present embodiment indicate a paring state of the current device and whether paring is possible.

A sixth bit of WFD device information field (bit 5) of the present embodiment indicates whether a WFD service discovery procedure is supported.

A seventh bit of WFD device information field (bit 6) of the present embodiment indicates a connection scheme of the device. That is, the seventh bit indicates whether the device supports a Wi-Fi direct scheme, i.e., P2P scheme, or a tunneled direct link setup (TDLS) scheme. The TDLS scheme is not the Wi-Fi direct scheme, and is a scheme of wireless communication where communication is performed through AP.

An eighth bit of WFD device information field (bit 7) of the present embodiment indicates information on content protection capability of the device. As illustrated in FIG. 7, the content protection capability may be defined in the Subelement ID and the points that display the content protection capability may be added, and as illustrated in FIG. 9, information on the content protection capability of the device may be indicated within the device information Subelement.

The content protection capability of the present embodiment may be information indicating whether HDCP 2.0 is supported.

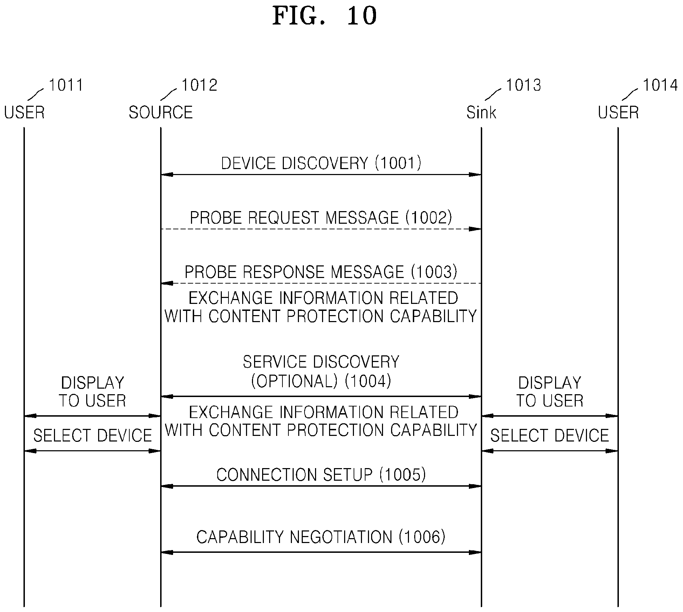

FIG. 10 is a signal flowchart of a WFD communication according to an embodiment of the present invention.

A probe request message 1002 and a probe response message 1003 are exchanged in a device discovery procedure 1001 between a source device 1012 and a sink device 1013. Information on the content protection capability of the device may be included in the probe request message 1002 and the probe response message 1003, and thus information on the content protection capability is exchanged between the source device 1012 and the sink device 1013.

The service discovery procedure 1004 is optional, and whether the procedure is to be performed is determined according to whether the device supports the content protection capability as described with reference to FIG. 9. When the service discovery procedure 1004 is performed, the information related with the content protection capability may be exchanged at the service discovery procedure 1004.

The information related with the content protection capability of the device is exchanged before the connection setup procedure 1005, and information related with the content protection capability of the device is displayed to users 1011 and 1014 of respective devices. The user may select the device with which a connection setup procedure is to be performed based on information related with the content protection performance of the displayed device.

After the information related with the content protection capability is exchanged, the connection setup procedure 1005 with the device selected by the user's input is performed, and thereafter a capability negotiation procedure 1006 is performed. In the capability negotiation procedure 1006, the device that is to play a role of an access point (AP) and a station is determined as in a general Wi-Fi direct scheme. Furthermore, information related with the content protection capability may be set to be exchanged in the capability negotiation procedure.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, etc. The computer readable recording medium can also be distributed over network coupled computer systems so that the computer readable code is stored and executed in a distributed fashion.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of performing communication between a first device and a second device by using a Wi-Fi direct peer-to-peer scheme during a device discovery procedure, the method comprising:
transmitting, by the first device, a probe request message (1002);
receiving, by the first device, a probe response message (1003) comprising information relating to a content protection capability of the second device; and
determining, by the first device, whether to perform a connection setup procedure with the second device based on the received information relating to the content protection capability;
wherein the probe request message comprises information relating to a content protection capability of the first device and information relating to a device type of the first device.

2. The method of claim 1, wherein the information relating to the content protection capability of the first device is used by the second device, to determine whether to perform a connection setup procedure by the second device.

3. The method of claim 2, further comprising:
receiving, by the first device, information regarding a determination result about whether to perform the connection setup procedure from the second device.

4. The method of claim 1, further comprising transmitting, by the first device, information regarding a determination result about whether to perform the connection setup procedure to the second device.

5. The method of any one of claims 1-4, wherein the information relating to the content protection capability and information relating to the device type are included in a Wi-Fi Display Information Element.

6. The method of claim 5, wherein the information relating to the content protection capability is included in a Wi-Fi Display Subelement within the Wi-Fi Display Information Element and the Wi-Fi Display Subelement further comprising one from among status information of the device, BSSID information relating to identifying a basic service set, Display EDID information indicating a type of data for transmitting and Coupled sink information indicating connection with another device.

7. The method of any one of claims 1-6, wherein the Wi-Fi Display Information Element further includes device information field and the device information field comprising one from among information indicating whether a secondary sink operation is supported, information indicating a paring state, information whether a WFD service discovery procedure is supported, and information indicating a connection scheme.

8. The method of claim 1, wherein the information relating to the device type of the first device comprises information indicating whether a role of source device or a role of sink device is supported.

9. A first device for performing communication using a Wi-Fi direct peer-to-peer scheme with a second device during a device discovery procedure, the first device comprising:
a transmitter (411) configured to transmit a probe request message (1002);
a receiver (412) configured to receive a probe response message (1003) comprising information relating to a content protection capability of a second device; and
a determination processor (413) configured to determine whether to perform a connection setup procedure with the second device based on the received information relating to the content protection capability;
wherein the probe request message comprises information relating to a content protection capability of the first device and, information relating to a device type of the first device.

10. The device of claim 9, wherein the information relating to the content protection capability of the first device is used by the second device, to determine whether to perform a connection setup procedure by the second device.

11. The device of claim 9 or 10, wherein the information relating to the content protection capability and the information relating to the device type are included in a Wi-Fi Display Information Element.

12. The device of claim 9 to 11, wherein the information relating to the device type of the first device comprises information indicating whether a role of source device or a role of sink device is supported.

13. A computer-readable recording medium having recorded there-on a program for implementing the steps of the method disclosed in any one of claims 1 to 8 when run on a computer.

## Patentansprüche

1. Verfahren zum Durchführen einer Kommunikation zwischen einer ersten Vorrichtung und einer zweiten Vorrichtung durch Verwenden eines Wi-Fi-Direct-Peer-to-Peer-Schemas während einer Vorrichtungsentdeckungsprozedur, wobei das Verfahren Folgendes umfasst:
Übertragen einer Sondierungsanforderungsnachricht (1002) durch die erste Vorrichtung;
Empfangen einer Sondierungsantwortnachricht (1003), die Informationen hinsichtlich einer Inhaltsschutzfähigkeit der zweiten Vorrichtung umfasst, durch die erste Vorrichtung; und
Bestimmen, ob eine Verbindungeinrichtungsprozedur mit der zweiten Vorrichtung durchzuführen ist, durch die erste Vorrichtung basierend auf den empfangenen Informationen hinsichtlich der Inhaltsschutzfähigkeit;
wobei die Sondierungsanforderungsnachricht Informationen hinsichtlich einer Inhaltsschutzfähigkeit der ersten Vorrichtung und Informationen hinsichtlich eines Vorrichtungstyps der ersten Vorrichtung umfasst.

2. Verfahren nach Anspruch 1, wobei die Informationen hinsichtlich der Inhaltsschutzfähigkeit der ersten Vorrichtung durch die zweite Vorrichtung verwendet werden, um zu bestimmen, ob eine Verbindungeinrichtungsprozedur durch die zweite Vorrichtung durchzuführen ist.

3. Verfahren nach Anspruch 2, das ferner Folgendes umfasst:
Empfangen von Informationen hinsichtlich eines Bestimmungsergebnisses darüber, ob die Verbindungeinrichtungsprozedur durchzuführen ist, von der zweiten Vorrichtung durch die erste Vorrichtung.

4. Verfahren nach Anspruch 1, das ferner Übertragen von Informationen hinsichtlich eines Bestimmungsergebnisses darüber, ob die Verbindungeinrichtungsprozedur durchzuführen ist, durch die erste Vorrichtung an die zweite Vorrichtung umfasst.

5. Verfahren nach einem der Ansprüche 1-4, wobei die Informationen hinsichtlich der Inhaltsschutzfähigkeit und die Informationen hinsichtlich des Vorrichtungstyps in einem Wi-Fi-Anzeige-Informationselement enthalten sind.

6. Verfahren nach Anspruch 5, wobei die Informationen hinsichtlich der Inhaltsschutzfähigkeit in einem Wi-Fi-Anzeige-Unterelement innerhalb des Wi-Fi-Anzeige-Informationselements enthalten sind und das Wi-Fi-Anzeige-Unterelement ferner eines von Statusinformationen der Vorrichtung, BSSID-Informationen in Bezug auf Identifizieren eines Basisdienstsatzes, Anzeige-EDID-Informationen, die einen Typ von Daten zur Übertragung angeben, und Gekoppelte-Senke-Informationen, die eine Verbindung mit einer anderen Vorrichtung angeben, umfasst.

7. Verfahren nach einem der Ansprüche 1-6, wobei das Wi-Fi-Anzeige-Informationselement ferner ein Vorrichtungsinformationsfeld beinhaltet und das Vorrichtungsinformationsfeld eines von Informationen, die angeben, ob eine sekundäre Senkenoperation unterstützt wird, Informationen, die einen Schälzustand angeben, Informationen darüber, ob eine WFD-Dienst-Entdeckungsprozedur unterstützt wird, und Informationen, die ein Verbindungsschema angeben, umfasst.

8. Verfahren nach Anspruch 1, wobei die Informationen hinsichtlich des Vorrichtungstyps der ersten Vorrichtung Informationen umfassen, die angeben, ob eine Rolle einer Quellenvorrichtung oder eine Rolle einer Senkenvorrichtung unterstützt wird.

9. Erste Vorrichtung zum Durchführen einer Kommunikation unter Verwendung eines Wi-Fi-Direct-Peer-to-Peer-Schemas mit einer zweiten Vorrichtung während einer Vorrichtungsentdeckungsprozedur, wobei die erste Vorrichtung Folgendes umfasst:
einen Sender (411), der zum Übertragen einer Sondierungsanforderungsnachricht (1002) konfiguriert ist;
einen Empfänger (412), der zum Empfangen einer Sondierungsantwortnachricht (1003) konfiguriert ist, die Informationen hinsichtlich einer Inhaltsschutzfähigkeit einer zweiten Vorrichtung umfasst; und
einen Bestimmungsprozessor (413), der zum Bestimmen, ob eine Verbindungeinrichtungsprozedur mit der zweiten Vorrichtung durchzuführen ist, basierend auf den empfangenen Informationen hinsichtlich der Inhaltsschutzfähigkeit konfiguriert ist;
wobei die Sondierungsanforderungsnachricht Informationen hinsichtlich einer Inhaltsschutzfähigkeit der ersten Vorrichtung und Informationen hinsichtlich eines Vorrichtungstyps der ersten Vorrichtung umfasst.

10. Vorrichtung nach Anspruch 9, wobei die Informationen hinsichtlich der Inhaltsschutzfähigkeit der ersten Vorrichtung durch die zweite Vorrichtung verwendet werden, um zu bestimmen, ob eine Verbindungeinrichtungsprozedur durch die zweite Vorrichtung durchzuführen ist.

11. Vorrichtung nach Anspruch 9 oder 10, wobei die Informationen hinsichtlich der Inhaltsschutzfähigkeit und die Informationen hinsichtlich des Vorrichtungstyps in einem Wi-Fi-Anzeige-Informationselement enthalten sind.

12. Vorrichtung nach Anspruch 9 bis 11, wobei die Informationen hinsichtlich des Vorrichtungstyps der ersten Vorrichtung Informationen umfassen, die angeben, ob eine Rolle einer Quellenvorrichtung oder eine Rolle einer Senkenvorrichtung unterstützt wird.

13. Computerlesbares Aufzeichnungsmedium, das ein Programm zum Implementieren der Schritte des Verfahrens nach einem der Ansprüche 1 bis 8, wenn es auf einem Computer abläuft, darauf aufgezeichnet aufweist.

## Revendications

1. Procédé de réalisation d'une communication entre un premier dispositif et un second dispositif en utilisant un schéma de poste à poste par Wi-Fi direct pendant une procédure de découverte de dispositif, le procédé consistant :
à transmettre, au moyen du premier dispositif, un message de demande de sondage (1002) ;
à recevoir, au moyen du premier dispositif, un message de réponse de sondage (1003) comportant des informations se rapportant à une capacité de protection de contenu du second dispositif ; et
à déterminer, au moyen du premier dispositif, s'il faut effectuer une procédure d'établissement de connexion avec le second dispositif en se basant sur les informations reçues se rapportant à la capacité de protection de contenu ;
dans lequel le message de demande de sondage comporte des informations se rapportant à une capacité de protection de contenu du premier dispositif et des informations se rapportant à un type de dispositif du premier dispositif.

2. Procédé selon la revendication 1, dans lequel les informations se rapportant à la capacité de protection de contenu du premier dispositif sont utilisées par le second dispositif pour déterminer s'il faut effectuer une procédure d'établissement de connexion au moyen du second dispositif.

3. Procédé selon la revendication 2, consistant en outre :
à recevoir, au moyen du premier dispositif, des informations concernant un résultat de détermination indiquant s'il faut ou non effectuer la procédure d'établissement de connexion à partir du second dispositif.

4. Procédé selon la revendication 1, consistant en outre à transmettre, au moyen du premier dispositif, des informations concernant un résultat de détermination indiquant s'il faut ou non effectuer la procédure d'établissement de connexion au second dispositif.

5. Procédé selon l'une quelconque des revendications 1 à 4, dans lequel les informations se rapportant à la capacité de protection de contenu et les informations se rapportant au type de dispositif sont incluses dans un élément d'information d'affichage Wi-Fi.

6. Procédé selon la revendication 5, dans lequel les informations se rapportant à la capacité de protection de contenu sont incluses dans un sous-élément d'affichage Wi-Fi dans l'élément d'information d'affichage Wi-Fi et le sous-élément d'affichage Wi-Fi comprenant en outre des informations d'état du dispositif ou des informations d'identifiant BSSID se rapportant à l'identification d'un ensemble de services de base ou des informations de données EDID d'affichage indiquant un type de données de transmission ou des informations de récepteur couplé indiquant une connexion avec un autre dispositif.

7. Procédé selon l'une quelconque des revendications 1 à 6, dans lequel l'élément d'information d'affichage Wi-Fi comprend en outre un champ d'informations de dispositif et le champ d'informations de dispositif comprenant des informations indiquant si une opération de récepteur secondaire est ou non prise en charge ou des informations indiquant un état d'épluchement ou des informations indiquant si une procédure de découverte de service WFD est ou non prise en charge ou des informations indiquant un schéma de connexion.

8. Procédé selon la revendication 1, dans lequel les informations se rapportant au type de dispositif du premier dispositif comportent des informations indiquant si un rôle d'un dispositif source ou un rôle d'un dispositif récepteur est ou non pris en charge.

9. Premier dispositif pour réaliser une communication à l'aide d'un schéma de poste à poste par Wi-Fi direct avec un second dispositif pendant une procédure de découverte de dispositif, le premier dispositif comprenant :
un émetteur (411) configuré pour transmettre un message de demande de sondage (1002) ;
un récepteur (412) configuré pour recevoir un message de réponse de sondage (1003) comportant des informations se rapportant à une capacité de protection de contenu d'un second dispositif ; et
un processeur de détermination (413) configuré pour déterminer s'il faut ou non effectuer une procédure d'établissement de connexion avec le second dispositif en se basant sur les informations reçues se rapportant à la capacité de protection de contenu ;
dans lequel le message de demande de sondage comporte des informations se rapportant à une capacité de protection de contenu du premier dispositif et des informations se rapportant à un type de dispositif du premier dispositif.

10. Dispositif selon la revendication 9, dans lequel les informations se rapportant à la capacité de protection de contenu du premier dispositif sont utilisées par le second dispositif pour déterminer s'il faut ou non effectuer une procédure d'établissement de connexion au moyen du second dispositif.

11. Dispositif selon la revendication 9 ou 10, dans lequel les informations se rapportant à la capacité de protection de contenu et les informations se rapportant au type de dispositif sont incluses dans un élément d'information d'affichage Wi-Fi.

12. Dispositif selon les revendications 9 à 11, dans lequel les informations se rapportant au type de dispositif du premier dispositif comportent des informations indiquant si un rôle d'un dispositif source ou un rôle d'un dispositif récepteur est ou non pris en charge.

13. Support d'enregistrement lisible par ordinateur sur lequel est enregistré un programme pour mettre en oeuvre les étapes du procédé divulgué selon l'une quelconque des revendications 1 à 8 lorsqu'il s'exécute sur un ordinateur.
